Europäisches Patentamt

European Patent Office

Office européen des brevets

(19)

(11) EP 1 557 994 A2

(12) **EUROPEAN PATENT APPLICATION**

(43) Date of publication:
   27.07.2005 Bulletin 2005/30

(51) Int Cl.$^7$: **H04L 27/26**

(21) Application number: 05001112.1

(22) Date of filing: 20.01.2005

(84) Designated Contracting States:
   **AT BE BG CH CY CZ DE DK EE ES FI FR GB GR HU IE IS IT LI LT LU MC NL PL PT RO SE SI SK TR**
   Designated Extension States:
   **AL BA HR LV MK YU**

(30) Priority: **20.01.2004 KR 2004004243**

(71) Applicant: **Samsung Electronics Co., Ltd.**
   **Suwon-si, Gyeonggi-do (KR)**

(72) Inventors:
   • **Kim, Min-Goo c/o Samsung Electronics Co., Ltd.**
     **Suwon-si, Gyeonggi-do (KR)**
   • **Ha, Sang-Hyuck**
     **c/o Samsung Electronics Co., Ltd.**
     **Suwon-si, Gyeonggi-do (KR)**
   • **Gu, Young-Mo c/o Samsung Electronics Co., Ltd.**
     **Suwon-si, Gyeonggi-do (KR)**

(74) Representative: **Lang, Johannes, Dipl.-Ing.**
   **Bardehle Pagenberg Dost**
   **Altenburg Geissler Isenbruck**
   **Postfach 86 06 20**
   **81633 München (DE)**

(54) **Modulating and coding apparatus and method in a high-rate wireless data communication system**

(57)    An apparatus and method for determining a modulation order of packet data to be transmitted through a subcarrier in a transmission apparatus. In the apparatus and method, transmitter physical channels encode and modulate data to transmit the user data with OFDM symbols. A controller outputs packet data to the transmitter physical channels, and determines the number of transmission slots, the number of OFDM symbols, the number of subchannels, and a size of an encoder packet. A modulation order and code rate decider receives, from the controller, the number of transmission slots, the number of OFDM symbols, the number of subchannels, and a size of an encoder packet, calculates a Modulation order Product code Rate (MPR), determines a modulation order according to the MPR, and outputs the determined modulation order to a corresponding physical channel.

FIG.9

EP 1 557 994 A2

**Description**

**BACKGROUND OF THE INVENTION**

Field of the Invention:

The present invention relates generally to a modulating and coding apparatus and method in a wireless data communication system. In particular, the present invention relates to a modulating and coding apparatus and method in a high-rate wireless data communication system.

Description of the Related Art:

In general, wireless data communication systems are classified as Mobile Communication Systems (MCS), Wireless Local Area Networks (WLAN), Wide Area Networks (WAN) and Metropolitan Area Networks (MAN), all of which are based on mobile communication technology. For Mobile Communication Systems, high-speed data transmission systems are being developed independently by 3rd Generation Partnership Project-2 (3GPP2), a standardization group for a synchronous Code Division Multiple Access (CDMA) mobile communication system, and 3rd Generation Partnership Project (3GPP), a standardization group for an asynchronous Universal Mobile Telecommunications System (UMTS) mobile communication system.

A description will now be made of Adaptive Modulation & Coding (AMC).

First, an IEEE 802.16a system will be described. The IEEE 802.16a system uses Orthogonal Frequency Division Multiple Access (OFDMA).

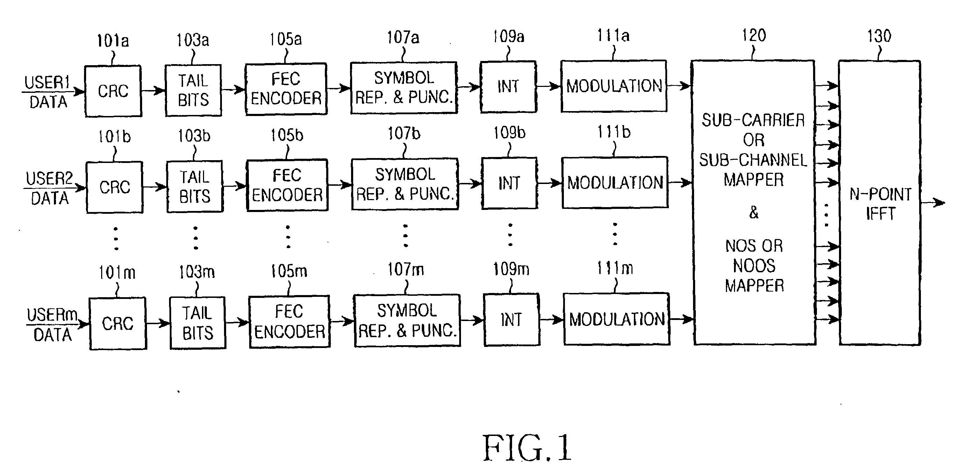

FIG. 1 is a block diagram illustrating structure of physical channels for transmitting high-rate data in an IEEE 802.16a system using OFDM. Referring to FIG. 1, all of the physical channels transmitted to users such as User1, User2, ..., Userm have the same structure. Therefore, in FIG. 1, the same elements are assigned the same reference numerals, and different letters a, b, ..., m are added to the ends of the reference numerals as indicators for indicating the respective users and their associated physical channels. Parameters used in the physical channels for the users User1, User2, ..., Userm can have either the same values or different values. For example, the respective physical channels can be different from one another in terms of the size of an input packet, code rate, modulation order and transmission duration. A description will now be made of a physical channel for a first user User1, by way of example.

In a physical channel, data Userl_Data to be transmitted to a first user User1 is input to a Cyclic Redundancy Check (CRC) adder 101a, and the CRC adder 101a adds a CRC to the input user data User1_Data so that a reception side can detect an error occurring due to noises in a channel transmission process. The CRC-added user data is input to a tail bit adder 103a, and the tail bit adder 103a adds tail bits to the CRC-added user data. An error correction code used for correcting an error occurring due to noises in a channel transmission process, and is generally used for Forward Error Correction (FEC). Generally, convolutional codes or turbo codes are used for the FEC used in a wireless communication system. These codes use tail bits which are termination bits for terminating the corresponding codes at a '0' state on a trellis diagram. Therefore, the tail bit-added data is FEC-encoded by an FEC encoder 105a. Because a detailed description thereof is given in related references, a description of FEC encoding will be omitted herein.

Next, in order to match the number of output signals of the FEC encoder 105a to the number of modulation symbols allocated to each user, a symbol repetition & puncturing part 107a performs symbol repeating and puncturing on the FEC-encoded data. The symbols that underwent repetition and puncturing are input to a channel interleaver 109a for converting a burst error occurring in the channel into a random error, and the channel interleaver 109a channel-interleaves the input symbols. The channel-interleaved symbols are input to a modulator 111 a, and the modulator 111 a modulates the channel-interleaved symbols. The modulated symbols are input to a subcarrier or subchannel mapper and NOS or NOOS mapper 120, and the subcarrier or subchannel mapper and Number of Slots (NOS) or Number of OFDM Symbols (NOOS) mapper 120 performs subcarrier or subchannel mapping and NOS or NOOS Number of OFDM Symbolsmapping on the modulated symbols for a transmission duration allocated to each user. The subcarrier or subchannel mapper and NOS or NOOS mapper 120 simultaneously processes data for all users. The symbols output from the subcarrier or subchannel mapper and NOS or NOOS mapper 120 are input to an inverse fast Fourier transform (IFFT) 130, and the IFFT 130 performs inverse fast Fourier transform on the input symbols. In this manner, data for each user is converted into one carrier signal and delivered to a radio frequency (RF) unit (not shown).

In the foregoing description, "NOS" or "NOOS" refers to a transmission duration allocated to each user, and is variable according to a size of user data. Therefore, an increase in NOS or NOOS causes an increase in a transmission time allocated to one packet. In addition, "subchannel" refers to a set of subcarriers used in Orthogonal Frequency Division Multiplexing (OFDM). It is not necessary that subcarriers constituting one subchannel should always be arranged in regular sequence in a frequency domain, and it is typical that multiple subcarriers constitute one subchannel according to a particular pattern. For example, when a given frequency bandwidth is divided into 2048 orthogonal frequencies, if there are $1^{st}$ to $2048^{th}$ subcarriers, one subchannel can be configured with 4 subcarriers of $1^{st}$, $8^{th}$, $16^{th}$, $32^{nd}$ and $64^{th}$ subcarriers. The configuration of a subchannel and the number of subcarriers constituting the subchannel are subject to change according to standards.

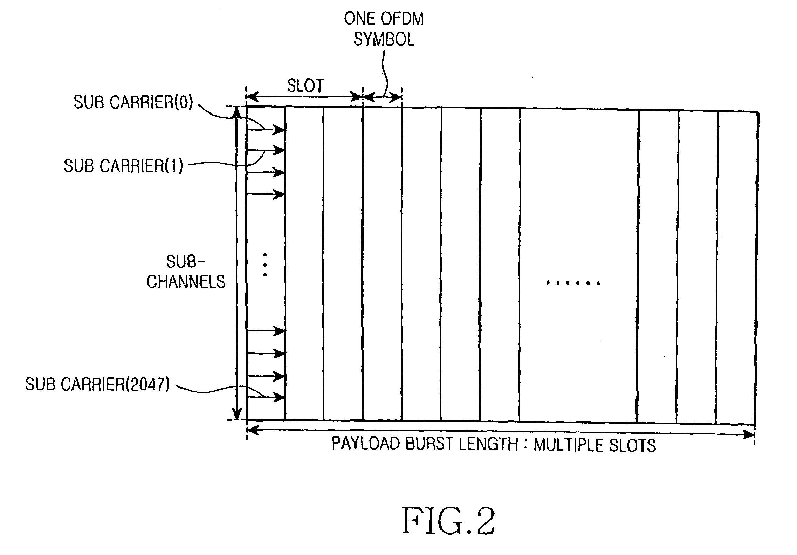

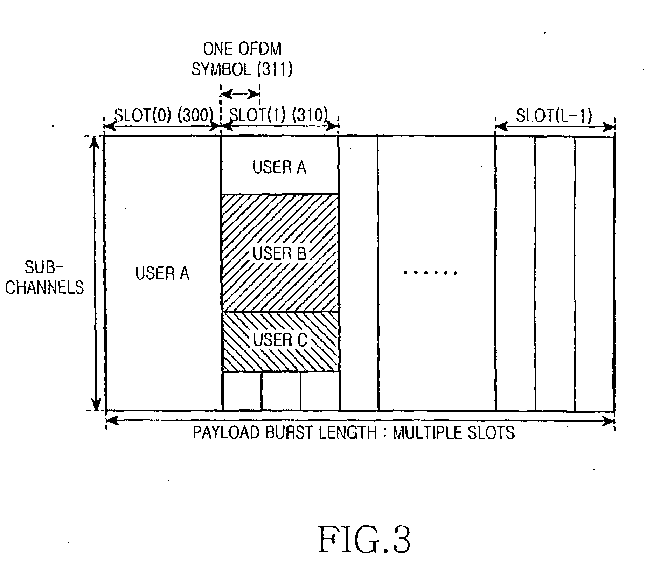

With reference to FIGs. 2 and 3, a description will now be made of a multiuser channel resource allocation configuration.

FIG. 2 is a diagram illustrating a configuration for allocating channel resources to multiple users, and FIG. 3 is a diagram illustrating a configuration in which channel resources are allocated to multiple users according to a scheme.

As can be understood from FIGs. 2 and 3, a subcarrier refers to an orthogonal frequency carrier used in OFDM, and has a value which is smaller than or equal to N of an N-point IFFT. That is, for N=2048, the number of subcarriers can be smaller than or equal to 2048. Further, in FIGs. 2 and 3, SLOT refers to a transmission duration, and one slot comprises one or more OFDM symbols. For example, in FIGs. 2 and 3, one slot comprises three OFDM symbols. "Payload Burst Length" shown in the bottom of FIGs. 2 and 3 refers to the total length of a burst used to transmit user data in a frame of a link channel. Therefore, the total channel resource allocable to all of the users is determined by the maximum number of subcarriers or subchannels and the Payload Burst Length.

With reference to FIG. 3, a description will now be made of an example in which channel resources are actually allocated to users A, B and C. The user A uses all subcarriers of a first slot SLOT(0) 300. Also, the user A uses some subcarriers of a second slot SLOT(1) 310. That is, the user A uses all subcarriers (or subchannels) of the first slot SLOT(0) 300, and uses some subcarriers (or subchannels) of the second slot SLOT(1) 310. The users B and C use different subcarriers (or subchannels) in the second slot SLOT(1) 310.

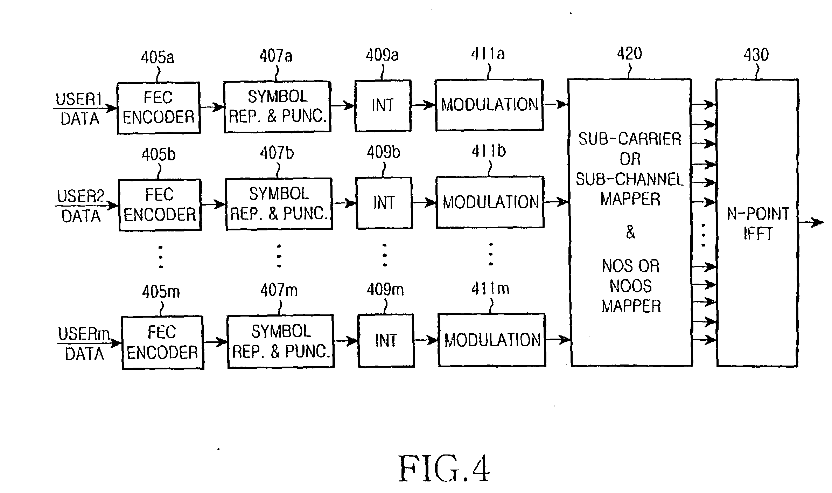

FIG. 4 is a block diagram illustrating structures of physical channels for transmitting data to a user. FIG. 4 is identical in structure to FIG. 1 except that the structure of FIG. 4 does not add CRC and tail bits. This is because the CRC function can be performed in a medium access control (MAC) layer. Therefore, elements 405, 407, 409, 411, 420 and 430 in FIG. 4 correspond to the elements 105, 107, 109, 111, 120 and 130 of FIG. 1, respectively. When the structures of both FIGs. 1 and 4 have multiple modulators and multiple code rates of error correction codes, they require a scheme for determining a code rate and a modulation order for guaranteeing each user the best performance.

More specifically, as illustrated in FIG. 1, in a wireless communication system, a modulator is required in a physical channel for a packet transmission service. In addition, the wireless communication system uses error correction codes in order to overcome a data error caused by noises occurring in a wireless communication channel. Generally, a high-rate wireless data service standard, for example, IEEE 802.16a, does not guarantee the mobility of a mobile station. However, CDMA2000 1x EV-DV, a mobile communication standard, is a standard that guarantees the mobility of a mobile station. In a system guaranteeing mobility, various schemes for overcoming not only a data error caused by noises occurring in a wireless communication channel but also a data error caused by fading should be taken into consideration. For example, in order for a transmitter to actively cope with a dynamic change in signal-to-noise ratio (SNR) occurring in a fading channel environment, a packet modulation scheme for transmitting the same transmission packet at all times and an AMC scheme of varying a code rate of an error correction code are extensively considered.

For example, when multiple packets having different sizes are used, usually different code rates and modulation schemes according to the packet sizes are used. The reason for using different code rates and modulation schemes is to increase the transmission efficiency of a channel by providing variety to every packet transmitted by a transmitter. That is, a transmitter selects an appropriate packet size from among a plurality of packet sizes according to a channel state, data buffer states (or data backlog) delivered from an upper layer, the number of available subchannels or OFDM subcarriers, and a transmission duration. If such a transmission packet is defined as an encoder packet (EP), selection of a modulation scheme is one of important factors in selection of an EP size. That is, even though the same EP size is used, the best modulation scheme and code rate of an error correction code can be determined differently according to a transmission time and the number of available subcarriers or subchannels. Here, NOS or NOOS meaning the transmission time is used as a transmission unit having a predetermined time. Therefore, an increase in NOS or NOOS indicates an increase in transmission time given to one packet.

When OFDMA is used, the number of subcarriers or subchannels allocated to each user or mobile station is variable according to a channel condition and the amount of data. Therefore, in an OFDMA system, channel resources available for a user are generally determined by the product of the number of subchannels (or subcarriers) and the number of OFDM symbols (or NOOSs). For example, in CDMA2000 1x EV-DV, a Modulation order Product code Rate (MPR) scheme is used as the scheme for determining a modulation scheme and a code rate. A description will now be made of the MPR scheme.

Generally, it is well known that a continuous reduction in the code rate of error correction codes causes a slow incremental increase of a coding gain in a digital system using error correction codes. Here, the "coding gain" refers to a SNR gain of the communication system using error correction codes as compared with a communication system not using error correction codes. Therefore, a bit error rate (BER) caused by the reduction in code rate shows an inclination to saturate toward a specific value in increments. In contrast, a continuous increase in code rate causes a rapid incremental reduction of the coding gain, and the rapid incremental reduction of the coding gain causes a rapid incremental increase of the bit error rate. This is supported by Shannon's channel capacity theory.

In a digital modulation scheme, a change in bit error rate at the same SNR due to an increase/decrease in modulation order is limited in its range, and it is known that a digital modulation scheme having a higher modulation order requires a higher SNR to achieve the same bit error rate. Therefore, if it is assumed that one system uses a fixed modulation symbol rate, there are many possible combinations for determining a code rate of error correction codes and a modulation order of a digital modulation scheme. However, when the characteristics of the error correction codes and the digital modulation scheme are taken into consideration, for a lower code rate, it is efficient to use a modulation scheme having a lower modulation order, for example, Quadrature Phase Shift Keying (QPSK), instead of reducing a code rate by using a higher-order modulation scheme. In contrast, for a higher code rate, it is preferable to efficiently prevent an increase in bit error rate by reducing a code rate using a higher-order modulation scheme.

However, at the same spectral efficiency, a code rate is calculated after a modulation order is determined. Therefore, it is not appropriate to specify a level of a code rate before a modulation order is determined. For example, a new function called a Modulation order Product code Rate (MPR) having a kind of a spectral efficiency concept, in which a modulation order and a code rate are both reflected.. In an OFDM/OFDMA system, a relationship between a modulation scheme and a code rate of an error correction code for each data rate cannot be analyzed in detail. Besides, when OFDMA is used, in order to efficiently operate channel resources allocated to each user or mobile station, not only the number of subcarriers or subchannels but also the number of OFDM symbols should be variably determined according to channel conditions and the amount of data. Such particulars should be taken into consideration to provide the best modulation scheme and code rate determining scheme..

## SUMMARY OF THE INVENTION

It is, therefore, an object of the present invention to provide a transmission apparatus and method for maximizing data transmission efficiency in determining various modulation schemes and code rates in a high-rate wireless data system.

It is another object of the present invention to provide a modulation scheme and code rate determining apparatus and method for increasing data transmission efficiency in a high-rate wireless data system in which various modulation schemes and code rates are used.

It is further another object of the present invention to provide an apparatus and method for determining the best modulation order and code rate of an error correction code, wherein a transmitter uses various packet sizes and selects one of a plurality of modulation schemes and one of a plurality of code rates according to a channel state, a data buffer state, the number of subcarriers, the number of Orthogonal Frequency Division Multiplexing (OFDM) symbols, and a transmission duration.

In accordance with a first aspect of the present invention, there is provided an apparatus for determining a modulation order of packet data to be transmitted through a plurality of subchannels. The apparatus comprises a controller for determining a number of OFDM symbols to be transmitted, the number of subchannelsand and a size of an encoder packet; and a modulation order decider for calculating a Modulation order Product code Rate (MPR), for each packet data to be transmitted to each of the users , based on the determined number of OFDM symbols, the determined number of subchannels and the determined size of an encoder packet and determining a modulation order according to the MPR.

In accordance with a second aspect of the present invention, there is provided an apparatus for determining a modulation order of packet data to be transmitted through a plurality of subchannels. The apparatus comprises a controller for determining the number of OFDM symbols to be transmitted, the number of subchannels and a size of an encoder packet; and a modulation order decider for calculating a Modulation order Product code Rate (MPR), for each packet data to be transmitted to each of the users , based on the determined number of OFDM symbols, the determined number of subchannels and the determined size of an encoder packet and determining a modulation order according to the MPR, wherein QPSK(modulation order 2) is used if $0 < MPR < 1.5$.

In accordance with a third aspect of the present invention, there is provided an apparatus for determining a modulation order of packet data to be transmitted through a plurality of subchannels. The apparatus comprises a controller for determining the number of OFDM symbols to be transmitted, the number of subchannels and a size of an encoder packet; and a modulation order decider for calculating a Modulation order Product code Rate (MPR) ,for each packet data to be transmitted to each of the users , based on the determined number of OFDM symbols, the determined number of subchannels and the determined size of an encoder packet and determining a modulation order according to the MPR, wherein QPSK(modulation order 2) is used if $0 < MPR < 1.5$.

In accordance with a fourth aspect of the present invention, there is provided an apparatus for determining a modulation order of packet data to be transmitted through a plurality of subchannels. The apparatus comprises a controller for determining a number of OFDM symbols to be transmitted, the number of subchannels and a size of an encoder packet; and a modulation order decider for calculating a Modulation order Product code Rate (MPR) ,for each packet data to be transmitted to each of the users , based on the determined number of OFDM symbols, the determined number of subchannels and the determined size of an encoder packet and determining a modulation order according to the MPR, wherein the MPR is calculated by

$$MPR = (EP\ size)/(payload\ modulation\ symbols)$$

$$= (EP\ size)/(48 \times (the\ number\ of\ subchannel)).$$

In accordance with a fifth aspect of the present invention, there is provided a method for determining a modulation order of packet data to be transmitted through a plurality of subcarriers. The method comprises the steps of: determining the number of OFDM symbols to be transmitted, the number of subchannelsand a size of an encoder packet; calculating a Modulation order Product code Rate (MPR) for packet data to be transmitted based on the number of OFDM symbols to be transmitted, the number of subchannels, and the size of an encoder packet; and determining the modulation order according to the calculated MPR.

In accordance with a sixth aspect of the present invention, there is provided a method for determining a modulation order of packet data to be transmitted through a plurality of subcarriers. The method comprises the steps of: determining a number of OFDM symbols to be transmitted, the number of subchannels and a size of an encoder packet; calculating a Modulation order Product code Rate (MPR) for packet data to be transmitted based on the number of OFDM symbols to be transmitted, the number of subchannels and the size of an encoder packet; and determining a modulation order according to the calculated MPR , wherein the MPR is calculated by

$$MPR = (EP\ size)/(payload\ modulation\ symbols)$$

$$= (EP\ size)/(48 \times (the\ number\ of\ subchannel)).$$

In accordance with a seventh aspect of the present invention, there is provided a method for determining a modulation order of packet data to be transmitted through a plurality of subcarriers. The method comprises the steps of: determining a number of OFDM symbols to be transmitted, the number of subchannels and a size of an encoder packet; calculating a Modulation order Product code Rate (MPR) for packet data to be transmitted based on the number of OFDM symbols to be transmitted, the number of subchannels and the size of an encoder packet; and determining a modulation order according to the calculated MPR , wherein QPSK(modulation order 2) is used if 0 < MPR <1.5.

In accordance with an eighth aspect of the present invention, there is provided a receiver comprising a control message processor for extracting information on the number of subchannels, subchannel index informationand modulation order informationfrom a control message , wherein the modulation order is determined in a transmitter by a MPR which is calculated by

$$MPR = (EP\ size)/(payload\ modulation\ symbols)$$

$$= (EP\ size)/(48 \times (the\ number\ of\ subchannel)) ;$$

and a demodulator for demodulating and decoding traffic data based on the information on the number of subchannels, subchannel index information and the modulation order information.

In accordance with a ninth aspect of the present invention, there is provided a reception method comprising a control message processing step of extracting information on the number of subchannels, subchannel index information and modulation order informationfrom a control message , wherein the modulation order is determined in a transmitter by a MPR which is calculated by

$$MPR = (EP\ size)/(payload\ modulation\ symbols)$$

$$= (EP\ size)/(48 \times (the\ number\ of\ subchannel)) ;$$

and a traffic processing step of demodulating and decoding traffic data using the information on the number of subchannels, subchannel index information, and the modulation order information.

**BRIEF DESCRIPTION OF THE DRAWINGS**

The above and other objects, features and advantages of the present invention will become more apparent from the following detailed description when taken in conjunction with the accompanying drawings in which:

FIG. 1 is a block diagram illustrating structures of physical channels for transmitting high-rate data in an IEEE 802.16a system using Orthogonal Frequency Division Multiplexing (OFDM);
FIG. 2 is a diagram illustrating a configuration for allocating channel resources to multiple users;
FIG. 3 is a diagram illustrating a configuration in which channel resources are allocated to multiple users according to a scheme;
FIG. 4 is a block diagram illustrating structures of physical channels for transmitting data to a user;
FIG. 5 is a diagram illustrating a configuration in which channel resources are allocated to multiple users according to an embodiment of the present invention using Orthogonal Frequency Division Multiple Access (OFDMA);
FIG. 6 is a diagram illustrating factors used for determining the number of modulation symbols allocated per slot according to an embodiment of the present invention in an OFDMA system;
FIG. 7 is a diagram illustrating an example in which two slots are allocated to a particular user in an OFDMA wireless communication system;
FIG. 8 is a diagram illustrating a case in which one user uses different error correction codes when channel resources are allocated to multiple users;
FIG. 9 is a block diagram illustrating a transmitter to which a code rate and a modulation order of each multiaccess user are to be applied using a Modulation order Product code Rate (MPR) according to an embodiment of the present invention;
FIG. 10 is a block diagram illustrating a receiver of an OFDMA system using an MPR scheme;
FIG. 11 is a block diagram illustrating an apparatus for transmitting user data and a control message in a system according to an embodiment of the present invention; and
FIG. 12 is a block diagram illustrating an operation between a base station and mobile stations in accordance with an embodiment of the present invebtion.

**DETAILED DESCRIPTION OF THE PREFERRED EMBODIMENTS**

Embodiments of the present invention will now be described in detail with reference to the accompanying drawings. In the following description, a detailed description of known functions and configurations incorporated herein has been omitted for conciseness.

Before a description of the present invention is given, data rates and subchannels among the particulars will be described. Each data rate table is configured such that there are provided about 120 different possible combinations of modulation schemes and code rates of error correction codes according to the number of subchannels. Therefore, the embodiment of the present invention provides a method for analyzing a relationship between a modulation scheme and a code rate of an error correction code for each data rate in an Orthogonal Frequency Division Multiplexing/ Orthogonal Frequency Division Multiple Access (OFDM/OFDMA) system. In addition, the embodiment of the present invention provides a criterion and method for determining a modulation order and a code rate of an error correction code according to a new analysis method.

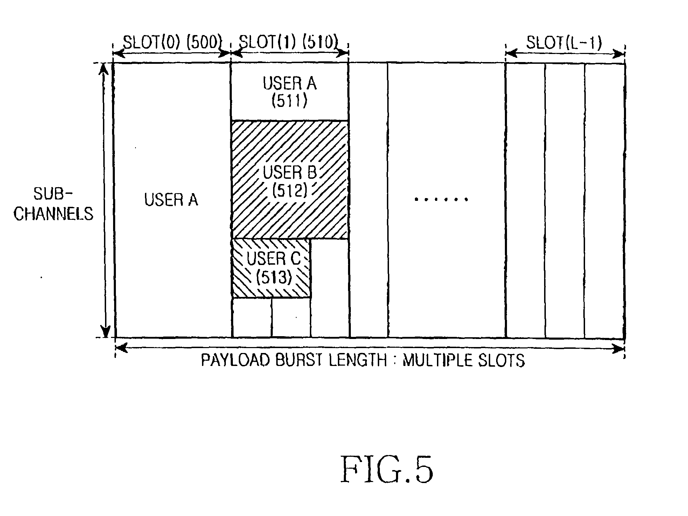

FIG. 5 is a diagram illustrating a configuration in which channel resources are allocated to multiple users according to an embodiment of the present invention in an high-rate wireless data system using OFDMA. With reference to FIG. 5, a description will now be made of a situation in which channel resources are allocated to multiple users according to an embodiment of the present invention.

As described above, the amount of channel resources allocated to one user is determined based on the number of subchannels or subcarriers and the number of slots. Therefore; in FIG. 5, a user A and a user B are allocated channel resources according to the number of subchannels or subcarriers and the number of slots. More specifically, the user A is allocated all of the subchannels of a first slot SLOT(0) 500 and occupies some subcarriers of a second slot SLOT(1) 510 to perform data transmission. Also, the user B occupies some other subcarriers of the second slot SLOT(1) 510 to perform data transmission. However, it will be assumed herein that a particular user, such as a user C of FIG. 5, may not transmit data on a slot-by-slot basis. That is, in some cases, error correction codes can be transmitted on a per-OFDM symbol basis like the data 513 transmitted to the user C of FIG. 5. These cases are actually applied to a system in which a Hybrid Automatic Repeat Request (HARQ) using Incremental Redundancy (IR) is used or transmission is achieved not on a per-slot basis but on a per-symbol basis. Also, such a method can be used when it is necessary to subdivide a block size of an error correction code for efficient use of channel resources. Therefore, there is a demand for a method for determining a modulation scheme for a block size given in a system that provides various channel resource allocation configurations, i.e., provides various block sizes for error correction codes.

A detailed description will now be made of a method for determining a modulation scheme and a code rate based on a block size according to an embodiment of the present invention. It will be assumed that an EP size is determined according to a size of a packet to be transmitted from an upper layer, for example, a MAC layer. In addition, it will be assumed that the number of subchannels (or subcarriers) and the number of slots (or OFDM symbols) to be allocated to one user are determined by a channel resource allocation method. In this situation, a transmitter should determine the best modulation scheme. Generally, the number of modulation symbols allocated to one user can be determined using the following 3 factors.

Factor

1. $N_{SCH}$: the number of subcarriers allocated per subchannel and OFDM symbol
2. $N_{OS}$: the number of OFDM symbols allocated per slot
3. $N_{MS}$: the number of modulation symbols allocated to channel resource comprised of one slot and one subchannel ($N_{MS} = N_{SCH} \times N_{OS}$)

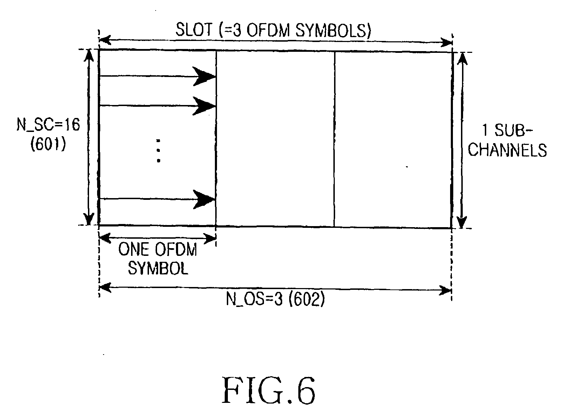

The three factors will now be described with reference to FIG. 6. FIG. 6 is a diagram illustrating factors used for determining the number of modulation symbols allocated per slot according to an embodiment of the present invention in an OFDMA system.

It is assumed in FIG. 6 that three OFDM symbols are transmitted for one slot. In this case where 3 OFDM symbols are transmitted for one slot, an N_SC 601 can become the number of subcarriers allocated to one subchannel. In FIG. 6, it is assumed that the number of subcarriers allocated to one subchannel is 16 (N_SC=16). The number of subcarriers allocated per subchannel is variable according to the number of OFDM symbols being transmitted. An N_OS 602 is the number of OFDM symbols allocated to one slot as described above. Therefore, N_OS=3. In this configuration, the number of modulation symbols allocated to channel resource comprised of one subchannel can be determined as described above. Because it is assumed in FIG. 6 that N_SC=16 and N_OS=3, the number of modulation symbols allocated to channel resources comprises one subchannel which is 48 (=16x3). When expressed with the number of subcarriers rather than modulation symbols, N_MS represents 48 subcarriers.

Therefore, when the foregoing MPR is used for OFDMA, an MPR value can be calculated by

Equation (4)

$$MPR = \frac{N_{EP}}{N_{MS} \times N_{SCH} \times NOS}$$

In Equation (4), $N_{SCH}$ denotes the number of subchannels. However, it is assumed in Equation (4) that a block for error correction codes always has the same number of subchannels for every slot like the user B of FIG. 5. Therefore, when the block has a different number of subchannels for each slot like the user A of FIG. 5, the MPR should be modified as shown in Equation (5).

Equation (5)

$$MPR = \frac{N_{EP}}{N_{MS} \times \sum_{k=1}^{N_{slot}} N_{SCH,k}}$$

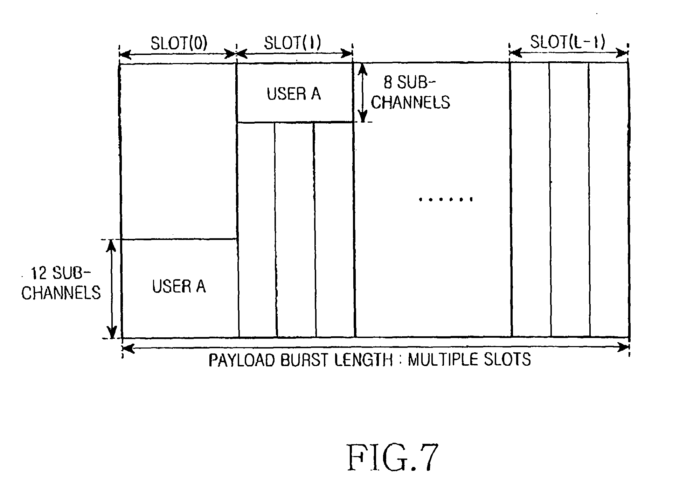

In Equation (5), $N_{SCH,k}$ denotes the number of subchannels allocated to a $k^{th}$ slot. A detailed description thereof will now be made with reference to FIG. 7. FIG. 7 is a diagram illustrating an example in which two slots are allocated to a particular user in an OFDMA wireless communication system. As can be understood from the example of FIG. 7, a user A transmits an OFDM symbol through 12 subchannels in a first slot SLOT(0) and an OFDM symbol through 8 subchannels in a second slot SLOT(1). Therefore, the number $N_{SCH,0}$ of subchannels in the first slot SLOT(0) is 12, and the number $N_{SCH,1}$ of subchannels in the second slot SLOT(1) is 8. In addition, the number $N_{MS}$ of modulation symbols allocated to all of the subchannels is 48. Therefore, the MPR is given as $N_{EP}/(48\times12+48\times8)$ by Equation (5).

Next, if a transmitter uses a subdivided error correction code block for HARQ, the transmitter can determine a transmission unit based on an OFDM symbol. That is, this corresponds to the data 513 transmitted to the user C of FIG. 5. In this case, the MPR is determined by

$$\text{Equation (6)}$$

$$MPR = \frac{N_{EP}}{\sum_{k=1}^{N_{slot}} \sum_{j}^{N_{SCH,k}} \sum_{i=1}^{N_{OS,kj}} N_{SCH}}$$

In Equation (6), $N_{OS,k,j}$ denotes the total number of OFDM symbols allocated to a $k^{th}$ slot and a $j^{th}$ subchannel, and $N_{SCH,K}$ denotes the number of subchannels in a $k^{th}$ slot.

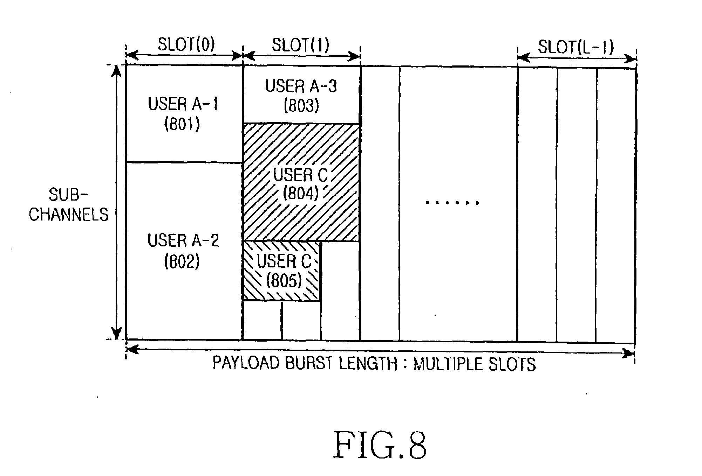

FIG. 8 is a diagram illustrating an example in which one user uses different error correction codes when channel resources are allocated to multiple users in an high-rate data system. In the case of FIG. 8, data is transmitted to a user A using different error correction codes. Assuming that first data USER A-1 801 in a first slot SLOT(0), second data USER A-2 802 in the first slot SLOT(0), and third data USER A-3 803 in a second slot SLOT(1) are transmitted to the user A, if the respective services have different quality-of-services (QoSs), a different MPR can be given to each service. Also, in this case, a modulation order and a code rate of an error correction code are determined by the MPR given by Equation (5) or Equation (6).

Next, a description will be made of a method for determining by a transmitter a code rate R of an error correction code and a modulation order (MO) of a modulator for each user from the MPR. First, the transmitter allocates channel resources according to the number of downlink (DL) multiaccess users for one 5-msec transmission frame. A controller calculates an MPR for each multiaccess user according to the number of subchannels (or subcarriers) allocated to each multiaccess user, the number of slots (or OFDM symbols) and an EP size allocated to each multiaccess user. Next, based on the MPR, each multiaccess user first determines a modulation order according to a modulation order determination threshold given below. Here, the threshold is a value previously given through experiments, and is variable according to the error correction code in use. It is assumed herein that turbo codes are used as the error correction codes, because most high-rate data systems use turbo codes having high coding gains. Therefore, a threshold according to the turbo codes is used. However, when the other type of error correction codes is used, it is specified that the threshold may be different, and it is also specified that the threshold is previously determined through experiments and is not changed later. In Equation (7) to Equation (9) below, MPR_TH1 refers to a threshold for determining QPSK and 16QAM, and MPR_TH2 refers to a threshold for determining 16QAM and 64QAM. It is assumed herein that MPR_TH1=1.5, MPR_TH2=3.2, and MPR_TH3=5.4. Once a modulation order is determined in this process, a code rate R of an error correction code is determined as a ratio of the MPR to the modulation order (MO) in accordance with Equation (10). Therefore, each multiaccess user calculates its own modulation order and code rate of an error correction code according to its own scheme, and delivers the calculation results to an error correction encoder and a modulator. If a system uses symbol puncturing and symbol repetition to match a code rate, the system calculates the number of puncturings and repetitions from the code rate and delivers the calculation result to a symbol repetition and puncturing part. There are several other code rate matching schemes, and a detailed description thereof will not be provided herein.

$$\text{Equation (7)}$$

*0. 0 < MPR = MPR_TH1 , then QPSK is selected*

$$\text{Equation (8)}$$

*MPR_TH1 < MPR = MPR_TH2, then 16QAM is selected*

Equation (9)

*MPR_TH2 < MPR = MPR_TH3, then 64QAM is selected*

Equation (10)

*Code rate (R) = MPR / MO (Modulation Order)*

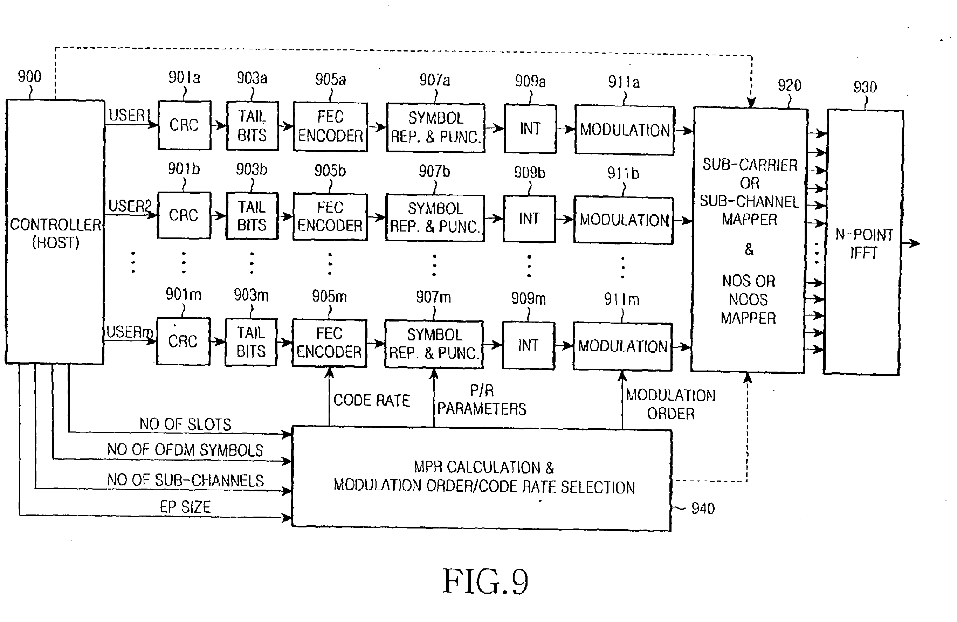

FIG. 9 is a block diagram illustrating a transmitter to which a code rate and a modulation order of each multiaccess user are to be applied using an MPR according to an embodiment of the present invention. With reference to FIG. 9, a detailed description will now be made of a structure and operation of an apparatus for applying an MPR according to an embodiment of the present invention.

A controller (or host, central processing unit (CPU), or digital signal processor (DSP)) 900 outputs user data to be transmitted to multiaccess users User1, User2, ..., Userm. The controller 900 can be implemented inside a modem, or implemented inside a DSP which is located outside the modem. At the same time, the controller 900 outputs information on NOS, NOOS, the number of subchannels and EP size, to a modulation order and code rate decider 940. A structure of a physical channel will now be described. The structure of a physical channel is identical to the structure descried in connection with FIG. 1. Therefore, reference numerals 901, 903, 905, 907, 909, 911, 920, and 930 of FIG. 9 correspond to the reference numerals 101, 103, 105, 107, 109, 111, 120, and 130 of FIG. 1. However, FIG. 9 is different from FIG. 1 in some parts, and the different parts will be described below. An FEC encoder 905 encodes user data at a code rate having a value determined by the modulation order and code rate decider 940. A symbol puncturing & repetition part 907 also determines a puncturing/repetition parameter according to a value determined by the modulation order and code rate decider 940, and a modulator 911 also determines a modulation order according to a value determined by the modulation order and code rate decider 940. In this way, a code rate, a symbol puncturing/repetition parameter, and a modulation order to be used in a physical channel of each user are determined.

However, because the conventional technology has provided no criterion for determining the code rate, the symbol puncturing/repetition parameter, and the modulation order, this embodiment of the present invention determines those values according to the MPR described above. Although only subchannels are shown in FIG. 9 for convenience, the number of subcarriers can be used as an input parameter according to the systems used. Also, the modulation order and code rate decider 940 provides a parameter for symbol puncturing and repetition. For example, when the FEC encoder 905 is using the lowest code rate 1/3 and a code rate determined based on the MPR is 1/6, the modulation order and code rate decider 940 outputs a parameter value, for example, a value requesting 2-times symbol repetition, to the symbol repetition & puncturing part 907. If a 2-times symbol repetition parameter is delivered and a code rate is 1/3, the final code rate becomes 1/6. The determination of a code rate and a modulation order based on the MPR can be implemented in the method of FIG. 9. However, the determination can also be achieved in a method different from that of FIG. 9. All values that can be calculated by the transmitter of FIG. 9 using a method different from that of FIG. 9 can also be stored in a table for future use. In implementation of the table, the table can be implemented outside a modem. In this case, the modulation order and code rate decider 940 is replaced with the table. Therefore, modulation orders and code rates are pre-calculated for all possible combinations according to respective EP sizes and MPRs, and stored in the table. The controller 900 outputs EP size, NOS (or NOOS), and the number of subchannels (or subcarriers) to the modulation order and code rate decider 940, and the modulation order and code rate decider 940 outputs a modulation order, a code rate, and a symbol puncturing/repetition parameter from the table in which modulation orders and code rates for all possible combinations are stored. Further, the modulation order and code rate decider 940 or the controller 900 controls a subcarrier or subchannel mapping and NOS or NOOS mapping operation. That is, the modulation order and code rate decider 940 or the controller 900 delivers a control value so that the control value is mapped to a channel through which it is delivered to a corresponding user as described with reference to FIG. 5. By doing so, packet data delivered to a particular user can be mapped in a physical channel on a per-slot basis or on a per-symbol basis. Therefore, a subcarrier or subchannel mapper and NOS or NOOS mapper 920 can map respective symbols one by one in the method proposed in an embodiment of the present invention, or map only a determined number of symbols in a particular slot. That is, all predetermined subchannels in a particular slot can be allocated to one user as shown by reference numeral 512 of FIG. 5, and only several symbols in predetermined subchannels in a particular slot can be allocated to one user as shown by reference numeral 513 of FIG. 5.

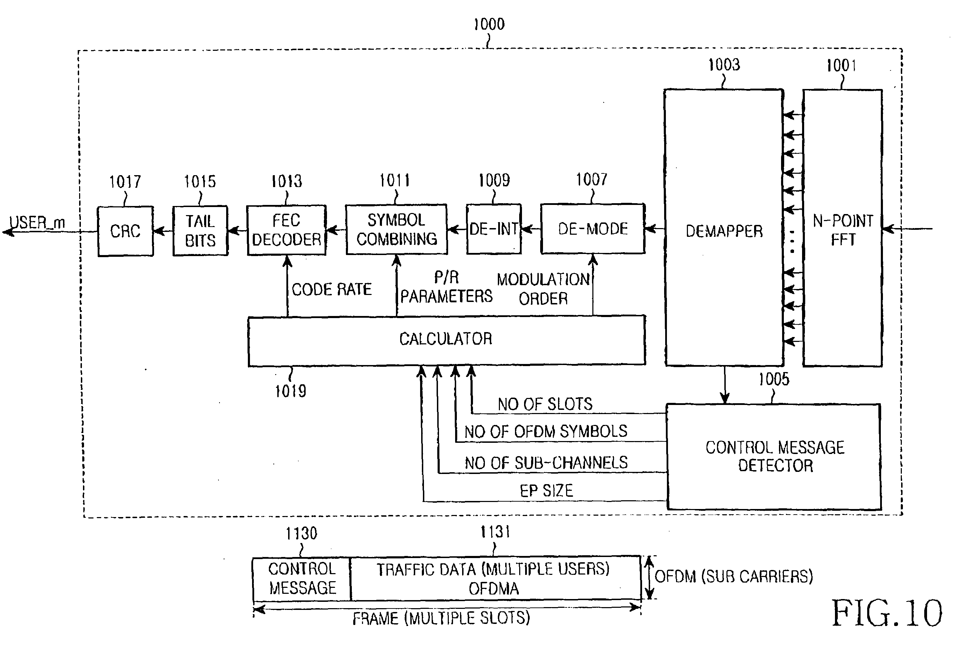

FIG. 10 is a block diagram illustrating a receiver of an OFDMA system using an MPR scheme. With reference to FIG. 10, a detailed description will now be made of a structure and operation of a receiver of an OFDMA system using an MPR scheme.

The receiver of FIG. 10 can be a mobile station. However, a receiver in a base station for receiving frames from each mobile station also has the same structure as the receiver of FIG. 10. In the base station, however, there are provided a plurality of the receivers of FIG. 10. Therefore, in the following description, it will be assumed that the receiver of FIG. 10 is a mobile station. Each mobile station, or receiver, should first determine whether a signal transmitted by a base station is a signal transmitted to the mobile station itself. The mobile station performs demodulation and decoding only on the signal transmitted to the mobile station itself, thereby restoring its user data. Therefore, the mobile station should correctly receive information on channel resources allocated to each user, i.e., NOS or NOOS based on an EP size, the number of subchannels (or subcarriers), subchannel index, modulation order and code rate, i.e., information on an MPR.

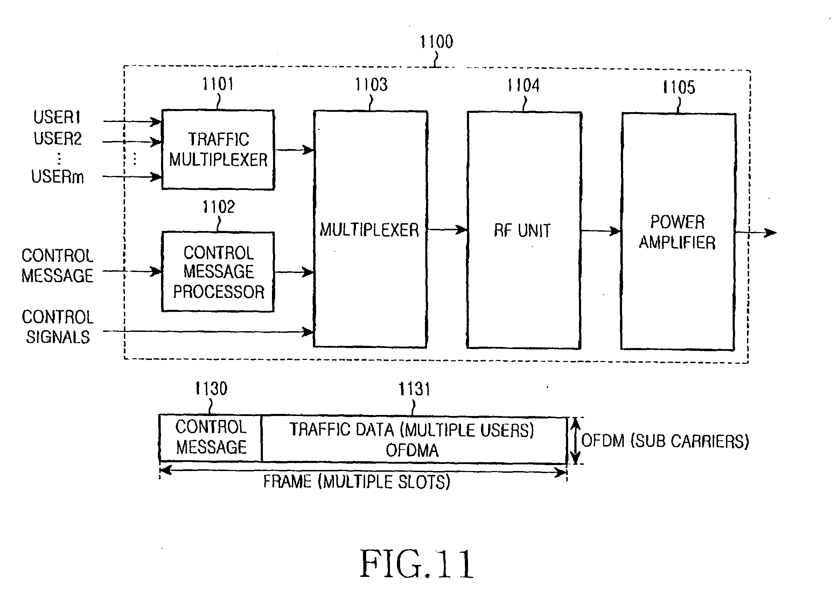

Such a control message is transmitted from a base station to a mobile station, and a structure of a base station for transmitting the control message along with user data will now be described with reference to FIG. 11.

FIG. 11 is a block diagram illustrating an apparatus for transmitting user data and a control message in a system according to an embodiment of the present invention. With reference to FIG. 11, a detailed description will now be made of a structure and operation of an apparatus for transmitting user data and a control message in a system according to an embodiment of the present invention.

User data Userl_DATA; User2_DATA, ..., Userm_DATA are input to a traffic multiplexer 1101, and the traffic multiplexer 1101 multiplexes the input user data. A control message for the user data is input to a control message processor 1102, and the control message processor 1102 processes the input control message. A signal output from the control message processor 1102 includes location information in a frame where user data is multiplexed every transmission frame, and information on an MPR, i.e., NOS or NOOS, the number of subchannels (or subcarriers), subchannel index, modulation order and code rate. Such control messages are divided into information that is not required to be transmitted every frame and a control message that should be transmitted every frame. Most of the information can be transmitted either every frame or on occasion. However, such information as an MPR necessary for user data demodulation and decoding is required to be transmitted every frame. Also, a control signal other than the control message is transmitted. The control signal can be a conventional pilot signal. However, a signal other than the pilot signal can also be used as the control signal. A detailed description thereof will not be given herein.

The multiplexed user data, the control message and the control signal are input to a multiplexer 1103. The multiplexer 1103 multiplexes the input traffic, control information and control message, and outputs a frame having a format shown in the bottom of FIG. 11. That is, the output frame is divided into a control message 1130 and OFDMA traffic data 1131. In this manner, one frame has a control message at the head thereof and multiplexed user data at the end thereof. Therefore, each user, or mobile station, can determine whether the data heading therefor has been received by detecting the control message, acquire data information if so, and perform data demodulation and decoding based on the result.

The multiplexed one-frame signal is input to an RF unit 1104, and the RF unit 1104 up-converts the input frame signal into an RF signal. The RF signal is input to a power amplifier (PA) 1105, and the power amplifier 1105 power-amplifies the input RF signal and transmits the amplified RF signal via an antenna ANT.

Referring back to FIG. 10, an N-point FFT 1001 in the receiver detects a plurality of subcarrier components of each frame from a received RF signal through an FFT operation. For such an operation, an automatic frequency controller (AFC) and an automatic gain controller (AGC) are additionally required. However, it is assumed herein that such AFC process and AGC process are fundamentally performed, so a detailed description thereof will not be given.

The FFT-processed signal is input to a demapper 1003. Because a frame can be received on a per-subchannel basis or on a per-subcarrier basis, the demapper 1003 performs demapping on the input signal according to a method used in the system. Because a frame transmission duration is NOS or NOOS, the demapper 1003 also performs demapping on the NOS or NOOS.

Among the demapped signals, a control message is input to a control message detector 1005 and a traffic signal is input to a traffic processor for traffic processing. The traffic processor comprises elements 1007 to 1007.

The control message detector 1005 will now be described. As described with reference to FIG. 11, received one-frame data is divided into a control message and traffic data, and this is illustrated even in the bottom of FIG. 10 using the same reference numerals. That is, the information input to the control message detector 1005 is the control message 1130. The control message detector 1005, as described above, detects location information in a multiplexed frame of data transmitted to each mobile station, and information on an MPR, i.e., NOS or NOOS, the number of subchannels (or subcarriers), subchannel index, modulation order and code rate, from the control message 1130. The information detected by the control message detector 1005 is input to a calculator 1019. The calculator 1019 detects a modulation order, a code rate, an MPR value, and a puncturing/repetition parameter from the input information.

The traffic data output from the demapper 1003 is input to a demodulator 1007, and the demodulator 1007 demodulates the input traffic data according to the modulation order received from the calculator 1019. The demodulated data is input to a deinterleaver 1009, and the deinterleaver 1009 deinterleaves the symbols which were interleaved during traffic transmission. The deinterleaved information is input to a symbol combiner 1011, and the symbol combiner 1011 performs a de-puncturing/de-repetition operation on the input information according to the puncturing/repetition parameter received from the calculator 1019, for rate matching. The traffic symbols rate-dematched by the symbol combiner 1011 are input to an FEC decoder 1013. The FEC decoder 1013 decodes the input traffic symbols according to the code rate received from the calculator 1019. The decoded symbols output from the decoder 1013 are input to a tail bit remover 1015, and the tail bit remover 1015 removes tail bits from the input decoded symbols. The tail bit-removed decoded information is input to a CRC checker 1017, and the CRC checker 1017 checks whether the decoded information is defective, and outputs the decoded information as user data if the decoded information is error-free.

All of the parameters NOS, NOOS, $N_{SCH}$, and $N_{EP}$ (indicating the number of encoder packets) are not always necessary as illustrated in FIG. 10. In most cases, an MPR are calculated using $N_{EP}$, NOOS and $N_{SCH}$. Therefore, it should be noted that FIG. 10 shows the all possible cases.

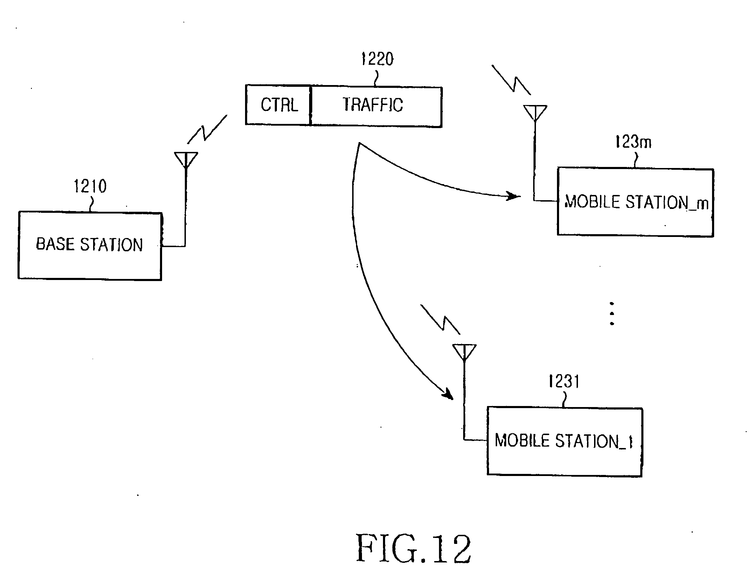

FIG. 12 is a block diagram illustrating an operation between a base station and mobile stations. With reference to FIG. 12, a description will now be made of an operation between a base station and mobile stations.

Referring to FIG. 12, a base station 1210 transmits information on channel resources allocated to respective users, i.e., information on NOS (or NOOS) based on an EP size, the number of subchannels (or subcarriers), subchannel index, modulation order and code rate. The base station 1210 is identical in structure to the base station illustrated in FIG. 11. Therefore, control information is multiplexed with each user data before being transmitted. A frame 1220 transmitted in FIG. 12 is equal to the frame illustrated in FIGs. 10 and 11. In FIG. 12, a control message is represented by CTRL. For example, MPR information allocated to each user data shown in FIG. 9 is transmitted by the base station 1210 through the CTRL of FIG. 12. In addition, the base station 1210 transmits each user data illustrated in FIG. 9 through the frame 1220 in which the user data is represented by TRAFFIC. Next, each mobile station first detects the CTRL part from the frame 1220 to determine whether its own data has been transmitted, and decodes its own data in the process described above if its own data has been transmitted.

As described above, the embodiments of the present invention provide a scheme for determining the best modulation order and code rate of an error correction code in the case where a transmitter uses various EP sizes and selects one of multiple modulation schemes and one of multiple error correction coding schemes before transmission according to channel state, data buffer state provided from an upper layer, NOS, NOOS, and transmission duration in a high-rate wireless data system, thereby contributing to an increase in data transmission efficiency and system efficiency.

While the invention has been shown and described with reference to certain embodiments thereof, it should be understood by those skilled in the art that various changes in form and details may be made therein without departing from the spirit and scope of the invention as defined by the appended claims.

**Claims**

1. An apparatus for determining a modulation order of packet data to be transmitted through a plurality of subchannels, the apparatus comprising:

   a controller for determining a number of OFDM symbols to be transmitted, the number of subchannelsand and a size of an encoder packet; and
   a modulation order decider for calculating a Modulation order Product code Rate (MPR), for each packet data to be transmitted to each of the users , based on the determined number of OFDM symbols, the determined number of subchannels and the determined size of an encoder packet and determining a modulation order according to the MPR.

2. The apparatus of claim 1, wherein the modulation order decider determines a code rate based on the modulation order and the MPR

3. The apparatus of claim 1, wherein the modulation order decider determines a puncturing/repetition parameter based on the modulation order and the MPR ,

4. The apparatus of claim 1, wherein the modulation order decider includes a table for storing code rates, modulation orders and the number of subchannels, all of which are determined based on the number of OFDM symbols to be transmitted, the number of subchannels, and a size of an encoder packet.

5. The apparatus of claim 1, wherein the MPR is calculated by

$$MPR = \frac{N_{EP}}{N_{MS} \times N_{SCH} \times NOS}$$

where $N_{SCH}$ denotes the number of subchannels, $N_{OS}$ denotes the number of OFDM symbols allocated per slot, $N_{EP}$ denotes the number of encoder packets, and $N_{MS}$ denotes the number of modulation symbols allocated to a channel resource comprised of one slot and one subchannel.

6. The apparatus of claim 1, wherein when packet data to be transmitted to a particular user is transmitted for two or more slots and has a different number of subchannels for each slot, the MPR is calculated by

$$MPR = \frac{N_{EP}}{N_{MS} \times \sum_{k=1}^{N_{slot}} N_{SCH,k}}$$

where $N_{SCH,K}$ denotes the number of subchannels allocated to a $k^{th}$ slot, $N_{EP}$ denotes the number of encoder packets, and $N_{MS}$ denotes the number of modulation symbols allocated to a channel resource comprised of one slot and one subchannel.

7. The apparatus of claim 1, wherein when packet data to be transmitted to a particular user does not occupy all subcarriers for one slot during its transmission, the MPR is calculated by

$$MPR = \frac{N_{EP}}{\sum_{k=1}^{N_{slot}} \sum_{j}^{N_{SCH,k}} \sum_{i=1}^{N_{OS,kj}} N_{SCH}}$$

where $N_{OS,k,j}$ denotes the total number of OFDM symbols allocated to a $k^{th}$ slot and a $j^{th}$ subchannel, $N_{SCH,k}$ denotes the number of subchannels allocated to a $k^{th}$ slot, $N_{EP}$ denotes the number of encoder packets, and $N_{slot}$ denotes the number of slots.

8. The apparatus of claim 1, wherein the modulation order is determined according to a predetermined value based on the calculated MPR.

9. An apparatus for determining a modulation order of packet data to be transmitted through a plurality of subchannels, the apparatus comprising:

a controller for determining the number of OFDM symbols to be transmitted, the number of subchannels and a size of an encoder packet; and
a modulation order decider for calculating a Modulation order Product code Rate (MPR) ,for each packet data to be transmitted to each of the users , based on the determined number of OFDM symbols, the determined number of subchannels and the determined size of an encoder packet and determining a modulation order according to the MPR, wherein QPSK(modulation order 2) is used if 0 < MPR <1.5.

10. The apparatus of claim 2, wherein the code rate is calculated by

$$code\ rate\ (R) = MPR/MO$$

where MO denotes a modulation order.

11. An apparatus for determining a modulation order of packet data to be transmitted through a plurality of subchannels, the apparatus comprising:

a controller for determining a number of OFDM symbols to be transmitted, the number of subchannels and a size of an encoder packet; and

a modulation order decider for calculating a Modulation order Product code Rate (MPR) ,for each packet data to be transmitted to each of the users , based on the determined number of OFDM symbols, the determined number of subchannels and the determined size of an encoder packet and determining a modulation order according to the MPR, wherein the MPR is calculated by

$$MPR = (EP\ size)/(payload\ modulation\ symbols)$$

$$= (EP\ size)/(48 \times (the\ number\ of\ subchannel))$$

**12.** A method for determining a modulation order of packet data to be transmitted through a plurality of subcarriers, the method comprising the steps of:

determining the number of OFDM symbols to be transmitted, the number of subchannelsand a size of an encoder packet;

calculating a Modulation order Product code Rate (MPR) for packet data to be transmitted based on the number of OFDM symbols to be transmitted, the number of subchannels, and the size of an encoder packet; and

determining the modulation order according to the calculated MPR.

**13.** The method of claim 12, wherein the MPR is calculated by

$$MPR = \frac{N_{EP}}{MPR = N_{MS} \times N_{SCH} \times N_{OS}}$$

where $N_{SCH}$ denotes the number of subchannels, $N_{OS}$ denotes the number of OFDM symbols allocated per slot, $N_{EP}$ denotes the number of encoder packets, and $N_{MS}$ denotes the number of modulation symbols allocated to a channel resource comprised of one slot and one subchannel.

**14.** The method of claim 12, wherein when packet data to be transmitted to a particular user is transmitted for two or more slots and has a different number of subchannels for each slot, the MPR is calculated by

$$MPR = \frac{N_{EP}}{N_{MS} \times \sum_{k=1}^{N_{slot}} N_{SCH,k}}$$

where $N_{SCH,k}$ denotes the number of subchannels allocated to a $k^{th}$slot, $N_{EP}$ denotes the number of encoder packets, and $N_{MS}$ denotes the number of modulation symbols allocated to a channel resource comprised of one slot and one subchannel.

**15.** The method of claim 12, wherein when packet data to be transmitted to a particular user does not occupy all subcarriers for one slot during its transmission, the MPR is calculated by

$$MPR = \frac{N_{EP}}{\sum_{k=1}^{N_{slot}} \sum_{j}^{N_{SCH,k}} \sum_{i=1}^{N_{OS,kj}} N_{SCH}}$$

where $N_{OS,kj}$ denotes the total number of OFDM symbols allocated to a $k^{th}$ slot and a $j^{th}$ subchannel, $N_{SCH,k}$ denotes the number of subchannels allocated to a $k^{th}$ slot, $N_{EP}$ denotes the number of encoder packets, and $N_{slot}$ denotes the number of slots.

16. A method for determining a modulation order of packet data to be transmitted through a plurality of subcarriers, the method comprising the steps of:

determining a number of OFDM symbols to be transmitted, the number of subchannels and a size of an encoder packet;
calculating a Modulation order Product code Rate (MPR) for packet data to be transmitted based on the number of OFDM symbols to be transmitted, the number of subchannels and the size of an encoder packet; and
determining a modulation order according to the calculated MPR , wherein the MPR is calculated by

$$MPR = (EP\ size)/(payload\ modulation\ symbols)$$

$$= (EP\ size)/(48 \times (the\ number\ of\ subchannel))$$

17. The method of claim 12, wherein the modulation order is determined according to a predetermined value based on the calculated MPR.

18. A method for determining a modulation order of packet data to be transmitted through a plurality of subcarriers, the method comprising the steps of:

determining a number of OFDM symbols to be transmitted, the number of subchannels and a size of an encoder packet;
calculating a Modulation order Product code Rate (MPR) for packet data to be transmitted based on the number of OFDM symbols to be transmitted, the number of subchannels and the size of an encoder packet; and
determining a modulation order according to the calculated MPR , wherein QPSK(modulation order 2) is used if 0 < MPR <1.5.

19. The method of claim 12, wherein the code rate is calculated by

$$code\ rate\ (R) = MPR/MO$$

where MO denotes a modulation order.

20. A receiver comprising:

a control message processor for extracting information on the number of subchannels, subchannel index information and modulation order information from a control message , wherein the modulation order is determined in a transmitter by a MPR which is calculated by

$$MPR = (EP\ size)/(payload\ modulation\ symbols)$$

$$= (EP\ size)/(48 \times (the\ number\ of\ subchannel))\ ;$$

and
a demodulator for demodulating and decoding traffic data based on the information on the number of subchannels, subchannel index information and the modulation order information.

21. A reception method comprising:

a control message processing step of extracting information on the number of subchannels, subchannel index information and modulation order information from a control message , wherein the modulation order is determined in a transmitter by a MPR which is calculated by

$$MPR = (EP\ size)/(payload\ modulation\ symbols)$$

$$= \textit{(EP size)} / \textit{(48} \times \text{(the number of subchannel))} ;$$

and

a traffic processing step of demodulating and decoding traffic data using the information on the number of subchannels, subchannel index information, and the modulation order information.

FIG.1

EP 1 557 994 A2

FIG.2

ONE OFDM
SYMBOL (311)

SLOT(0) (300)  SLOT(1) (310)  SLOT(L-1)

USER A

USER B

USER A

USER C

SUB-
CHANNELS

......

PAYLOAD BURST LENGTH : MULTIPLE SLOTS

FIG.3

EP 1 557 994 A2

FIG.4

EP 1 557 994 A2

SLOT(0) (500) | SLOT(1) (510) | SLOT(L-1)

SUB-CHANNELS

USER A

USER A (511)

USER B (512)

USER C (513)

. . . . . .

PAYLOAD BURST LENGTH : MULTIPLE SLOTS

FIG.5

EP 1 557 994 A2

SLOT (=3 OFDM SYMBOLS)

N_SC=16
(601)

1 SUB-
CHANNELS

ONE OFDM
SYMBOL

N_OS=3 (602)

FIG.6

FIG.7

SLOT(L-1)

SLOT(1)

SLOT(0)

USER A-3
(803)

USER C
(804)

USER C
(805)

USER A-1
(801)

USER A-2
(802)

PAYLOAD BURST LENGTH : MULTIPLE SLOTS

SUB-
CHANNELS

FIG.8

FIG.9

EP 1 557 994 A2

FIG.10

FIG.11

EP 1 557 994 A2

FIG.12

EP 1 557 994 A2